Europäisches Patentamt

European Patent Office

Office européen des brevets

(19)

(11) Numéro de publication: **0 359 705 B1**

(12) **FASCICULE DE BREVET EUROPEEN**

(45) Date de publication de fascicule du brevet: **02.03.94**    (51) Int. Cl.5: **G01D  5/26**

(21) Numéro de dépôt: **89810643.0**

(22) Date de dépôt: **31.08.89**

(54) **Capteur à fibre optique bimodale à démultiplexage spatial.**

(30) Priorité: **16.09.88 CH 3450/88**

(43) Date de publication de la demande:
**21.03.90 Bulletin   90/12**

(45) Mention de la délivrance du brevet:
**02.03.94 Bulletin   94/09**

(84) Etats contractants désignés:
**CH DE FR GB LI**

(56) Documents cités:
**GB-A- 2 150 687**
**GB-A- 2 155 621**
**US-A- 4 342 907**

**PATENT ABSTRACTS OF JAPAN vol. 010, no. 371 (P-526) 11 décembre 1986, & JP-A-61 165 633**

(73) Titulaire: **CENTRE SUISSE D'ELECTRONIQUE ET DE MICROTECHNIQUE S.A.**
**Maladière 71**
**CH-2000 Neuchâtel 7(CH)**

(72) Inventeur: **Falco, Lucien**
**Rudebins 15**
**CH-2088 Cressier(CH)**
Inventeur: **Parriaux, Olivier**
**Place de la Palud 1**
**CH-1003 Lausanne(CH)**
Inventeur: **Denervaud, Pierre**
**Numa-Droz 35**
**CH-2300 La Chaux-de-Fonds(CH)**
Inventeur: **Kotrotsios, Georges**
**Chemin du Joran 7**
**CH-2000 Neuchâtel(CH)**

(74) Mandataire: **Brulliard, Joel**
**c/o Centre Suisse d'Electronique**
**et de Microtechnique S.A.**
**Maladière 71**
**CH-2007 Neuchâtel (CH)**

EP 0 359 705 B1

## Description

L'invention se rapporte aux capteurs optiques en général et concerne plus particulièrement les capteurs à couplage de modes, la grandeur physique ou chimique à mesurer définissant le taux de couplage entre modes.

Les systèmes de mesure par réflectométrie dans le domaine temporel ou fréquentiel ("Réflectométrie temporelle et fréquentielle dans les fibres optiques", H. Lemaire et al., Bull. ASE/UCS 76, 1985) sont utilisés pour déterminer le profil d'atténuation le long d'une fibre en vue de détecter et de localiser les fautes de ligne dans le domaine des fibres optiques de télécommunication.

Une modulation sinusoïdale en amplitude du signal lumineux d'entrée à fréquence donnée est réalisée sur un domaine fréquentiel étendu. Une modulation à fréquence élevée permet la détection et la localisation des pertes ponctuelles ou semi-ponctuelles. La mesure est réalisée sur l'amplitude et la phase de l'onde rétrodiffusée.

Les inconvénients de ces systèmes résident dans le fait qu'ils nécessitent une électronique sophistiquée, que leur résolution spatiale est limitée, que leur dynamique est faible et leur temps de réponse élevé.

Les capteurs interférométriques ont été développés dans le but de mesurer des paramètres tels que la température, l'élongation, et la pression; paramètres qui influencent l'indice de réfraction d'une fibre optique.

Le résumé de la présentation que S.I. NAJAFI a faite à la Conférence OFC'88 des 25-28 janvier 1988 à New Orleans et intitulée "Glass waveguide devices : uses and performance limitation", montre l'effet d'une charge sur un guide d'ondes optique. Le guide d'ondes est placé dans l'un des bras d'un interféromètre Mach-Zehnder et l'effet de la variation de paramètres d'environnement sur les caractéristiques du guide est déterminé par l'analyse des franges d'interférences produites. La principale limitation de ces systèmes est que seule une mesure globale, donnant l'intégrale de la perturbation, est effectuée.

D'autres types de transducteurs tels que les fibres à micro-courbures sont utilisés comme détecteurs de température à réflectométrie optique. Le brevet US 4,654,520 de Richard W. Griffiths décrit un capteur distribué à fibres optiques constitué par une fibre revêtue. Une déformation du revêtement entraîne une modification de l'indice de réfraction de la fibre qui, à son tour, entraîne une variation de l'énergie lumineuse rétrodiffusée. La mesure de cette énergie permet de connaître l'ampleur et la localisation de la déformation.

De tels capteurs permettent de mesurer le profil de distribution de l'énergie lumineuse. Ces dispositifs, cependant, nécessitent le plus souvent l'utilisation d'une fibre spéciale et offrent toujours une dynamique limitée.

Une alternative à l'utilisation d'un interféromètre du type mentionné ci-dessus ou à la réflectométrie optique, utilisée dans le domaine des capteurs à fibres optiques, est l'utilisation de capteurs interférométriques à couplage de mode. Le document "Birefringent stress location sensor" (R.B. Franks et al., SPIE, vol. 586, Fiber Optic Sensors 1985) montre un capteur distribué utilisant une source laser, modulée en fréquence, injectant un seul mode dans une fibre optique biréfringente ou monomode utilisée en bimodale. Sous l'effet d'un paramètre extérieur, une perturbation - en l'occurence des micro-courbures - engendre un couplage de modes donnant naissance à la propagation d'un deuxième mode dans la fibre. La détection est réalisée par interférométrie intermodale. La détermination de la position de la perturbation est déduite de la mesure de la fréquence de battement du signal de détection.

Les problèmes posés par cette solution sont multiples. La mesure du taux de couplage et la détermination de la position dudit couplage le long de la fibre, sont rendues difficiles par des problèmes :
- de linéarité de la rampe de fréquence du signal de modulation
- de stabilité de la source
- de rétrodiffusion
- d'atténuation de la détection due à la polarisation et au mode de mélange
- de séparation des harmoniques générés par plusieurs transducteurs.

Aussi un objet de l'invention est-il un capteur à fibre optique permettant la détermination de la position et de l'amplitude d'une perturbation le long de ladite fibre optique et ne présentant pas les inconvénients mentionnés ci-dessus.

Un autre objet est de s'affranchir de la détection par mélange optique réalisé par interférométrie intermodale ou interférométrie par division d'onde.

Un autre objet est de s'affranchir d'une rétrodiffusion de l'onde caractéristique des systèmes à réflectométrie optique.

Un autre objet est de s'affranchir de l'état de polarisation des modes se propageant dans le guide d'ondes.

Le capteur à fibre optique de l'invention comprend des moyens optiques permettant
- l'injection dans un guide d'ondes bimodal, respectivement biréfringent, du mode fondamental $LP_{01}$ ou, respectivement, du mode de polarisation TE,
- le guidage d'ondes, notamment du mode injecté,

- le filtrage des modes autres que ledit mode injecté et
- des moyens répartis le long de la fibre optique qui, en réponse à une perturbation extérieure, permettent le couplage du mode injecté avec d'autres modes tels que le mode guidé $LP_{11}$ ou le mode de polarisation TM, et est caractérisé en ce qu'il comprend en outre:
- des moyens pour réaliser la séparation spatiale des modes se propageant dans ledit guide d'ondes, l'amplification de cette séparation spatiale et la focalisation des modes séparés spatialement et
- des moyens électriques permettant la détection en intensité de chaque mode

Les avantages principaux de cette invention résident dans le fait que la dynamique du système et la résolution spatiale sont augmentées par rapport à celles des solutions connues. Comme le capteur travaille en transmission, toute l'énergie injectée est détectée. L'électronique reste identique, que le système comporte un seul ou plusieurs transducteurs. La source de lumière, notamment en ce qui concerne sa polarisation et sa stabilité, ne nécessite pas des caractéristiques des plus strictes. Contrairement à un système optique par réflectométrie optique dans le domaine temporel (OTDR) ou fréquentiel (OFDR), le capteur de l'invention ne nécessite pas de moyennage sur un grand nombre de mesures et de ce fait le temps de réponse du système est plus court.

D'autres objets, caractéristiques et avantages de la présente invention apparaîtront plus clairement à la lecture de la description suivante faite en relation avec les dessins joints dans lesquels :

la fig. 1    est une représentation synoptique du capteur à fibre optique de l'invention;

la fig. 2    est un premier exemple de réalisation d'un capteur où seul un des transducteurs distribués le long de la fibre est activé à la fois;

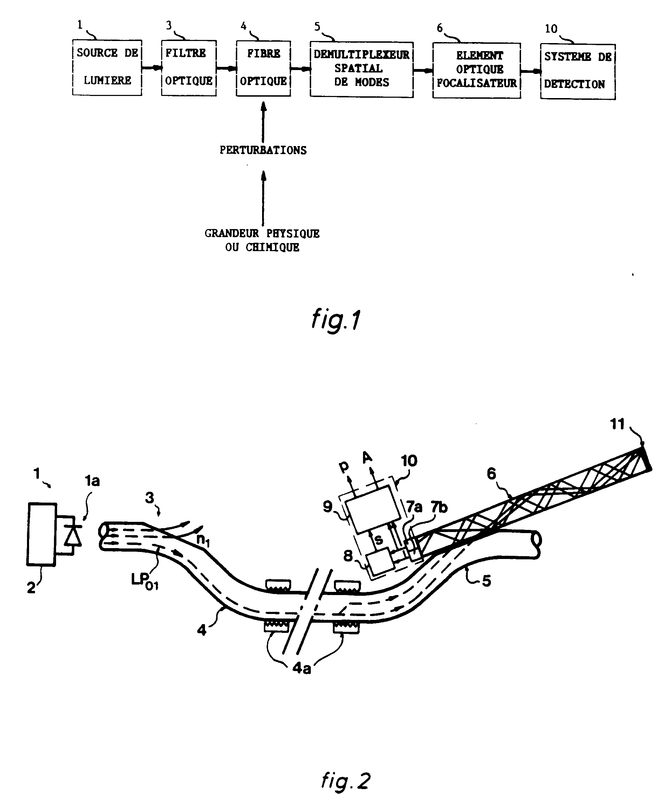

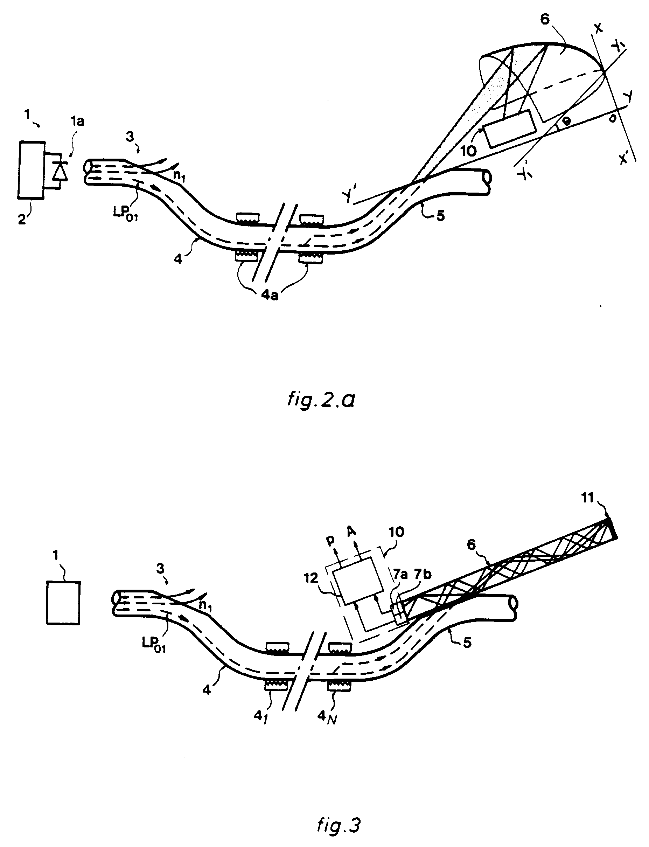

la fig. 2.a    montre une réalisation préférée de l'élément optique focalisateur;

la fig. 3    est un deuxième exemple de réalisation d'un capteur où les transducteurs distribués le long de la fibre peuvent être activés simultanément.

La fig. 1 est une représentation synoptique du capteur à fibre optique selon l'invention.

Le capteur à fibre optique comporte, en suivant le trajet optique, une source de lumière 1, une fibre optique 4, dont la première extrémité forme un filtre optique 3 et l'autre extrémité forme un démultiplexeur spatial de modes 5, un élément optique focalisateur 6, un miroir 11 sur la première face de l'élément optique focalisateur 6 et un système de détection 10.

Le système de détection 10 se compose, dans un premier exemple de réalisation (fig. 2), de détecteurs 7a et 7b d'un multiplicateur 8 et d'un circuit électronique 9. Les détecteurs sont couplés au multiplicateur et le circuit 9 reçoit les signaux de sortie des détecteurs et le signal s de sortie du multiplicateur, et fournit un signal p de position de la perturbation et l'amplitude A de la perturbation. Dans un deuxième exemple de réalisation (fig. 3), les détecteurs 7a et 7b sont connectés à un système de mesure d'intensité spectrale 12.

Le capteur à fibre optique à démultiplexage spatial comprend, en plus de la fibre optique 4, une source de lumière 1 prévue pour injecter un seul mode dans la fibre optique 4, soit le mode guidé fondamental $LP_{01}$, soit le mode de polarisation TE.

Le filtrage des modes autres que le mode fondamental $LP_{01}$ ou le mode de polarisation TE est effectué à l'entrée du guide d'ondes 4 par le filtre optique 3.

La fibre optique 4, qui est monomode dans une gamme donnée de longueur d'ondes, par exemple autour de 1,3 $\mu$m, propage en fait des ondes de plus faible longueur d'onde, par exemple 0,8 $\mu$m.

La fibre optique 4 peut être soumise à une ou plusieurs perturbations, localisées ou distribuées, engendrées par la grandeur physique ou chimique à mesurer. Sous l'effet d'une telle perturbation, le mode injecté se propageant dans la fibre optique 4 peut être couplé à un mode d'ordre supérieur. Les deux modes se propagent alors dans le guide avec un taux de couplage dépendant de l'amplitude de la perturbation.

Les modes couplés sont séparés spatialement hors du guide d'ondes 4 par le démultiplexeur spatial de modes 5 et se présentent sous la forme de demi-lunes superposées, comme décrit par W.V. Sorin et al. "Phase-velocity measurements using prism output coupling for single and few-mode optical fibers", Optics Letters / Vol. 11 No. 2 / February 1986 / pp. 106-108. Un élément optique focalisateur 6 focalise chacun des modes en autant de points distincts et amplifie leur séparation spatiale.

Pour un capteur dans lequel une seule perturbation à la fois le long de la fibre optique 4 peut exister, la détermination de la phase du signal de sortie s du multiplicateur 8 fournit la position p de la perturbation. Pour un capteur dans lequel les perturbations peuvent apparaître de façon quelconque, la mesure des intensités des modes à une longueur d'onde donnée permet de définir la position de la perturbation. Dans tous les cas la mesure de l'intensité lumineuse de chaque onde spatialement séparée permet de définir l'amplitude A de la perturbation.

La fig. 2 représente un premier exemple de réalisation selon lequel la source lumineuse 1 est une diode laser multimode 1a modulée en amplitude à une fréquence de 10 Mhz par un modulateur d'amplitude 2. Les modes autres que le mode guidé fondamental $LP_{01}$ sont filtrés à l'entrée de la fibre optique 4 par un filtre optique 3. Celui-ci est constitué par une fibre polie latéralement dans laquelle seul reste guidé le mode fondamental, les modes d'ordre supérieur étant purgés vers l'extérieur. Pour cela l'indice $n_1$ du milieu extérieur entourant ladite fibre polie doit satisfaire à la relation : $n_{11} < n_1 < n_{01}$, $n_{01}$ et $n_{11}$ représentant, respectivement, les indices effectifs du mode fondamental $LP_{01}$ et du mode d'ordre un $LP_{11}$. La fibre optique 4 monomode dans une gamme donnée de longueurs d'ondes, typiquement autour de 1,3 $\mu$m, qui propage le mode fondamental de longueur d'onde plus faible, typiquement 0,8 $\mu$m, est soumise à des perturbations transmises par des transducteurs 4a distribués le long de ladite fibre. Un seul des transducteurs 4a est activé à la fois. Les transducteurs 4a sont identiques et engendrent des micro-courbures de la fibre de période spatiale Λ, déterminée de façon à ce que l'expression

$$\Lambda = \lambda_0 / (n_{e11} - n_{e01}),$$

où $\lambda_0$ est la longueur d'onde centrale de la source
$n_{e01}$ l'indice effectif du mode fondamental $LP_{01}$
$n_{e11}$ l'indice effectif du mode d'onde un $LP_{11}$,
soit vérifiée.

Le démultiplexeur spatial de modes 5 est une fibre courbée et comportant une zone polie, dont l'indice effectif de chaque mode est inférieur à l'indice extérieur $n_1'$ et dont la zone polie est couplée par collage à un élément optique focalisateur 6. Le milieu d'indice $n_1'$ situé entre la zone polie de la fibre optique et le demi-cylindre formant l'élément optique focalisateur 6 est une colle époxy d'indice supérieur à l'indice du coeur de la fibre.

Ledit élément optique focalisateur 6 se compose d'un demi-cylindre aux surfaces polies optiquement et réalisé dans un verre Schott Mainz de type BK7 d'indice 1,51, de rayon 15 mm et de longueur 150 mm. Un miroir 11 est posé à l'extrémité du demi-cylindre de façon à ce que l'onde se propage une deuxième fois à travers l'élément optique focalisateur 6 réalisant ainsi une amplification de la séparation modale.

Selon une réalisation préférée de l'élément optique focalisateur 6, ledit élément comprend une surface réfléchissante parabolique représentée à la fig. 2.a. Ladite surface réfléchissante est obtenue après rotation d'une parabole autour d'un axe parallèle à l'axe (Y,Y') de la section de la fibre polie.

Ladite parabole se caractérise par une longueur focale f et un axe principal $(Y_1,Y_1')$ faisant un angle $\theta$ avec ledit axe (Y,Y'). L'angle $\theta$ correspond à l'angle de fuite moyen des modes dans le milieu extérieur de haut indice $n_1'$.

La surface parabolique s'exprime, dans un système de coordonnées (X,Y) comprenant l'axe (Y,Y') de la section de fibre polie, par l'expression :

$$Y = (- X.\sin 2\theta - 2f.\sin\theta.tg\theta - 4f.\cos\theta + \Delta) / 2.\sin^2\theta$$

avec $\Delta = - 4f^2.tg^2\theta.\cos 2\theta + 16f^2 - 16f.X.\sin\theta$.

L'élément optique focalisateur, conformément à la réalisation préférée ci-dessus, est réalisé dans un verre Schott Mainz de type BK7 d'indice de réfraction 1,51. La longueur focale f de la parabole a, par exemple, une valeur de 40 mm. L'angle $\theta$ est typiquement de l'ordre de 25°.

L'élément optique focalisateur, selon la réalisation préférée, sépare spatialement les modes et focalise les deux faisceaux. Ladite focalisation s'effectue selon les deux axes (X,X') et (Z,Z') et fait apparaître deux points lumineux.

Chaque mode spatialement séparé est alors détecté séparément à l'aide des détecteurs 7a et 7b dont les sorties sont connectées à un multiplicateur 8. Le circuit électronique 9 détermine la position p et l'amplitude A de la perturbation à partir des signaux issus des détecteurs 7 et du multiplicateur 8.

La fig. 3 représente un second exemple de réalisation où la source de lumière 1 est constituée par une association de diodes électroluminescentes telles que celle décrite par G. Piffaretti et al./"Measurement of series of single mode fibers"/ New switching device lowing automatic OTDR / EFOC 88. La largeur spectrale de la source ainsi obtenue est de l'ordre de 400 nm. Les transducteurs $4_1$, $4_N$ répartis le long de la fibre sont en nombre N limité de l'ordre de 10 et engendrent chacun des micro-courbures de périodes spatiales $\Lambda_i$ différentes. Chacune de ces périodes est fixée de manière à obtenir, pour une longueur d'onde donnée, une adaptation de phase des modes et un couplage intermodal maximum, réalisés lorsque

$$\Lambda_i = \lambda_i / (n_{e11} - n_{e01});$$

où i est un nombre entier de 1 à N,
$\Lambda_i$ est la période spatiale de la $i^{ème}$ perturbation,
$\lambda_i$ la longueur d'onde associée au $i^{ème}$ transducteur,
$n_{e01}$ l'indice effectif du mode fondamental $LP_{01}$,
$n_{e11}$ l'indice effectif du mode d'ordre un $LP_{11}$.
Les N transducteurs $4_1$ à $4_N$ peuvent être simultanément actifs. Après séparation spatiale des modes, la détection porte sur l'intensité lumineuse de chaque mode aux N longueurs d'ondes présentes et est effectuée à l'aide d'un système d'analyse spectrale 12. Chacune des N périodes spatiales étant associée à une longueur d'onde de la source, une détection à une de ces longueurs d'ondes permet la détermination biunivoque du couplage actif réalisé au niveau de l'un quelconque des N transducteurs, d'où la position de la perturbation. L'intensité lumineuse de chaque mode renseigne sur l'amplitude de la perturbation.

Le capteur à fibre optique se compose de manière générale d'une source de lumière 1 couplée à un filtre optique 3 pouvant être soit une fibre polie telle que décrite par R.A. BERGH et al., "Single-mode fiber-optic polarizer," Optics Letters/ Vol.5, No.11/ November 1980, pp. 479-481; soit deux fibres - l'une bimodale, l'autre monomode - connectées bout à bout ou encore une fibre biseautée par étirage sous haute température (Cf. V. SHAH et al. / "Biconical tapered fiber-mode filter for bimodal systems" / OFC 88 / WQ 13).

La fibre optique 4 est une fibre monomode à une longueur d'onde donnée et fonctionnant à une longueur d'onde inférieure, les modes susceptibles de se propager étant des modes guidés : mode fondamental $LP_{01}$, mode d'ordre un $LP_{11}$ et modes d'ordre supérieur.

Le démultiplexeur spatial de modes 5 est une fibre biseautée par étirage sous haute température ou encore une fibre polie telle que celles utilisées dans les coupleurs directionnels décrits par Roger H. STOLEN et al. "Polarization-Selective Fiber Directional Coupler," Journal of Lightwave Technology/ Vol. LT-3, No.5/ October 1985/ pp. 1125-1129.

Une telle fibre polie est associée à un élement focalisateur 6 d'indice de réfraction proche ou égal à l'indice du coeur de la fibre et disposé sur la tranche polie de ladite fibre.

La fibre optique 4 peut encore être une fibre biréfringente propageant des modes de polarisation TE et TM.

## Revendications

1. Capteur à fibre optique comprenant des moyens optiques permettant:
   - l'injection dans un guide d'ondes bimodal, respectivement biréfringent, du mode fondamental $LP_{01}$ ou, respectivement, du mode de polarisation TE,
   - le guidage d'ondes, notamment du mode injecté,
   - le filtrage des modes autres que ledit mode injecté, et
   - des moyens, répartis le long de la fibre optique, qui, en réponse à une perturbation extérieure, permettent le couplage du mode injecté avec d'autres modes tels que le mode guidé $LP_{11}$ ou le mode de polarisation TM,
   
   caractérisé en ce qu'il comprend en outre:
   - des moyens pour réaliser la séparation spatiale des modes se propageant dans ledit guide d'ondes, l'amplification de cette séparation spatiale et la focalisation des modes séparés spatialement et
   - des moyens (7, 10) electriques permettant la détection en intensité de chaque mode.

2. Capteur à fibre optique selon la revendication 1 caractérisé en ce que le moyen de filtrage des modes est un filtre optique (3) constitué:
   - soit d'une fibre bimodale connectée à une fibre monomode,
   - soit d'une fibre bimodale polie,
   - soit d'une fibre biseautée par étirage sous haute température, dans laquelle ne subsiste que le mode fondamental guidé $LP_{01}$ ou le mode de polarisation TE, les autres modes étant purgés.

3. Capteur à fibre optique selon la revendication 1, caractérisé en ce que ledit guide d'ondes est composé:
   - soit d'une fibre optique (4) monomode pour une gamme donnée de longueurs d'ondes et fonctionnant dans une gamme de longueurs d'ondes plus basses permettant la propagation de modes guidés non couplés
   - soit d'une fibre optique (4) biréfringente permettant la propagation de modes de polarisation.

4. Capteur à fibre optique selon la revendication 1 caractérisé en ce que le moyen de séparation spatiale est un démultiplexeur spatial de mode (5) composé:
   - soit d'une fibre polie associée à un élément optique focalisateur (6)
   - soit d'une fibre biseautée par étirage sous haute température.

5. Capteur à fibre optique selon la revendication 1, caractérisé en ce que l'élément optique focalisateur (6) est un demi-cylindre amplifiant la séparation spatiale entre modes et focalisant sur les détecteurs (7) les ondes séparées spatialement.

6. Capteur à fibre optique selon la revendication 1, caractérisé en ce que l'élément optique focalisateur (6) comprend une surface réfléchissante parabolique obtenue après rotation d'une parabole autour d'un axe parallèle à l'axe $(Y,Y')$ de la section de la fibre polie, parabole d'axe principal $(Y_1,Y_1')$ faisant un angle $\theta$ avec ledit axe $(Y,Y')$, $\theta$ étant l'angle de fuite moyen des modes.

7. Capteur optique selon la revendication 1, caractérisé en ce que l'amplitude de la perturbation extérieure est déterminée par la mesure des intensités respectives des ondes spatialement séparées.

8. Capteur à fibre optique selon l'une quelconque des revendications 1 à 6, caractérisé en ce que
   - les moyens optiques permettant l'injection dans ledit guide d'ondes (4) consistent en une source lumineuse (1), laquelle est modulée en amplitude,
   - les moyens répartis le long de la fibre optique (4) sont des transducteurs engendrant des micro-courbures de période spatiale $\Lambda$ identique, un seul des transducteurs étant activé à la fois, et
   - la détection de chaque mode est faite à la longueur d'onde centrale de ladite source lumineuse et suivie de la multiplication des signaux obtenus en vue de déterminer la position et l'amplitude de la perturbation.

9. Capteur à libre optique selon l'une quelconque des revendications 1 à 6, caractérisé en ce que
   - les moyens optiques permettant l'injection dans ledit guide d'ondes (4) consistent en une source lumineuse (1), laquelle est non monochromatique
   - les moyens répartis le long de la fibre optique sont des transducteurs engendrant des micro-courbures de périodes spatiales $\Lambda$ différentes définies pour des longueurs d'ondes comprises dans la largeur spectrale de la source lumineuse
   - la détection de chaque mode est réalisée auxdites longueurs d'ondes
   - l'analyse spectrale des signaux de détection fournit la position et l'amplitude de la perturbation.

**Claims**

1. Fibre-optical sensor comprising optical means:
   - for injecting the fundamental mode $LP_{01}$ or respectively the polarisation mode TE into a bimodal, respectively birefringent waveguide,
   - for waveguiding, especially of the injected mode,
   - for filtering the modes other than the said injected mode, and
   - means distributed along the optical fibre which, in response to an external perturbation, allow the injected mode to be coupled with other modes such as the guided mode $LP_{11}$ or the polarisation mode TM,
   characterised in that it moreover comprises:
   - means for effecting the spatial splitting of the modes propagating in the said waveguide, the amplification of this spatial splitting and the focusing of the modes split spatially, and
   - electrical means (7, 10) for detecting the intensity of each mode.

2. Fibre-optical sensor according to claim 1, characterised in that the means for filtering the modes is an optical filter (3) consisting of:
   - a bi-modal fibre connected to a monomode fibre,
   - a polished bi-modal fibre,
   - or a fibre bevelled by drawing at high temperature,
   in which only the guided fundamental mode $LP_{01}$ or the polarisation mode TE remains, the other modes being removed.

3. Fibre-optical sensor according to claim 1, characterized in that the said waveguide is composed of:
   - a monomode optical fibre (4) for a given range of wavelengths and operating within a lower range at wavelengths allowing for the propagation of non-coupled guided modes,
   - or a birefringent optical fibre (4) allowing for the propagation of polarisation modes.

4. Fibre-optical sensor according to claim 1, characterised in that the spatial splitting means is a spatial mode demultiplexer (5) composed of:
   - a polished fibre associated with a focusing optical element (6),
   - or a fibre bevelled by drawing at high temperature.

5. Fibre-optical sensor according to claim 1, characterised in that the focusing optical element (6) is a half-cylinder amplifying the spatial splitting between modes and focusing the waves split spatially on the detectors (7).

6. Fibre-optical sensor according to claim 1, characterised in that the focusing optical element (6) comprises a parabolic reflecting surface obtained following the rotation of a parabola about an axis parallel to the axis (Y, Y') of the section of the polished fibre, the parabola having a principal axis ($Y_1$, $Y_1$') including an angle $\theta$ with the said axis (Y, Y'), $\theta$ being the average leakage angle of the modes.

7. Optical sensor according to claim 1, characterised in that the amplitude of the external perturbation is determined by the magnitude of the respective intensities of the waves split spatially.

8. Optical-fibre sensor according to any one of claims 1 to 6, characterised in that
   - the optical means for injection into the said waveguide (4) consist of a light source (1) the amplitude of which is modulated,
   - the means distributed along the optical fibre (4) are transducers generating microbending with an identical spatial period A, only one of the transducers being activated at a time, and
   - the detection of each mode is effected at the central wavelength of the said light source and is followed by the multiplication of the signals obtained in order to determine the position and amplitude of the perturbation.

9. Optical-fibre sensor according to any one of claims 1 to 6, characterised in that
   - the optical means for injection into the said waveguide (4) consist of a monochromatic light source (1),
   - the means distributed along the optical fibre are transducers generating microbending with different spatial periods A defined for wavelengths included in the spectral width of the light source,
   - the detection of each mode is effected at the said wavelengths, and
   - the spectral analysis of the detection signals provides the position and amplitude of the perturbation.

**Patentansprüche**

1. Faseroptischer Sensor umfassend optische Mittel, die ermöglichen:
   - das Injizieren in einen bimodalen bzw. birefringenten Wellenleiter des Grundmodus $LL_{01}$ bzw. des Polarisationsmodus TE,
   - die Fuhrung der Wellen insbesondere des injizierten Modus,
   - das Filtern der Moden, die von dem injizierten Modus abweichen und
   - Mittel, verteilt längs der optischen Faser, die in Reaktion auf eine äußere Störung das Koppeln des injizierten Modus mit anderen Moden ermöglicht, wie dem geführten Modus $LP_{11}$ oder dem Polarisationsmodus TM, dadurch gekennzeichnet, daß er ferner umfaßt:
   - Mittel zum Realisieren der räumlichen Separation der sich in dem Wellenleiter ausbreitenden Moden, die Verstärkung dieser räumlichen Separation und die Fokalisierung der räumlich getrennten Moden und
   - elektrische Mittel (7, 10), die die Erkennung der Intensität jedes Modus ermöglichen.

2. Faseroptischer Sensor nach Anspruch 1, dadurch gekennzeichnet, daß das Mittel zum Filtern der Moden ein optisches Filter (3) ist, bestehend aus:
   - entweder einer bimodalen Faser, angeschlossen an eine monomodale Faser,
   - oder eine bimodale polierte Faser,
   - oder eine durch Ziehen bei hoher Temperatur angespitzte Faser, in der nur der geführte Grundmodus $LP_{01}$ oder der Polarisationsmodus TE, bereinigt von den anderen Moden, überlebt.

3. Faseroptischer Sensor nach Anspruch 1, dadurch gekennzeichnet, daß der Wellenleiter zusammengesetzt ist aus:
   - entweder einer monomodalen optischen Faser (4) für einen gegebenen Bereich von Wellenlängen und funktionsfähig in einem niedrigeren Bereich von Wellenlängen, was die Ausbreitung des geführten nicht gekoppelten Modus ermöglicht,
   - oder einer birefringenten optischen Faser (4), welche die Ausbreitung des Polarisationsmodus ermöglicht.

4. Faseroptischer Sensor nach Anspruch 1, dadurch gekennzeichnet, daß das Mittel der räumlichen Separation ein räumlicher Modus-Demultiplexer (5) ist, umfassend;
   - entweder eine polierte Faser, zugeordnet einem optischen Fokalisationselement (6)
   - oder eine durch Ziehen bei hoher Temperatur angespitzte Faser.

5. Faseroptischer Sensor nach Anspruch 1, dadurch gekennzeichnet, daß das optische Fokalisationselement (6) ein Halbzylinder ist, der die räumliche Separation zwischen den Moden verstärkt und auf die Detektoren (7) die räumlich separierten Wellen fokalisiert.

6. Faseroptischer Sensor nach Anspruch 1, dadurch gekennzeichnet, daß das optische Fokalisationselement (6) eine parabolische reflektierende Oberfläche aufweist, gewonnen nach Rotation einer Parabel um eine Achse parallel zur Achse (Y, Y') des Querschnitts der polierten Faser, welche Parabel mit der Hauptachse (Y, Y') einen Winkel $\theta$ mit der Achse (Y, Y') bildet, wobei $\theta$ der mittlere Entweichungswinkel der Moden ist,

7. Optischer Sensor nach Anspruch 1, dadurch gekennzeichnet, daß die Amplitude der äußeren Störung bestimmt wird durch die Messung der jeweiligen Intensitäten der räumlich separierten Wellen.

8. Faseroptischer Sensor nach einem der Ansprüche 1 bis 6, dadurch gekennzeichnet, daß das optische Mittel, das die Injektion in den Wellenleiter (4) ermöglicht, aus einer Lichtquelle (1) besteht, die amplitudenmoduliert ist,
   - daß längs der optischen Faser verteilte Mittel (4) Wandler sind, welche identische Mikrokurven identischer räumlicher Periode $\Lambda$ erzeugen, wobei immer nur ein Wandler gleichzeitig aktiviert ist, und
   - die Erfassung jedes Modus bei der Zentralwellenlänge der Lichtquelle erfolgt und gefolgt wird von der Multiplikation der gewonnenen Signale zwecks Bestimmung der Position und der Amplitude der Störung.

9. Faseroptischer Sensor nach einem der Ansprüche 1 bis 6, dadurch gekennzeichnet, daß
   - die optischen Mittel, welche die Injektion in den Wellenleiter (4) ermöglichen, aus einer Lichtquelle (1) bestehen, welche nicht monochromatisch ist,
   - die längs der optischen Faser verteilten Mittel Wandler sind, welche Mikrokurven unterschiedlicher räumlicher Perioden $\Lambda$ erzeugen, definiert durch die Wellenlängen, die in der spektralen Breite der Lichtquelle enthalten sind,
   - die Erfassung jedes Modus realisiert wird bei diesen Wellenlängen,
   - die spektrale Analyse der Erfassungssignale die Position und die Amplitude der Störung liefert.

fig.1

fig.2

fig.2.a

fig.3